# EUROPEAN PATENT APPLICATION

(11) **EP 4 574 507 A1**
(43) Date of publication of application: **25.06.2025**
(21) Application number: 24219851.3
(22) Date of filing: 13.12.2024
(51) Int. Cl.: B60K 35/10, B60K 35/22, B60K 35/81, B60R 1/00

(54) **VEHICLE SURROUNDING ENVIRONMENT DISPLAY DEVICE, AND METHOD FOR CONTROLLING VEHICLE SURROUNDING ENVIRONMENT DISPLAY DEVICE**

(30) Priority: 20.12.2023 JP 2023214570
(71) Applicant: TOYOTA JIDOSHA KABUSHIKI KAISHA, Toyota-shi Aichi 471-8571 (JP)
(72) Inventor: YAMAMOTO, Yuki, TOYOTA-SHI, AICHI, 471-8571 (JP); HABUTA, Rie, KARIYA-SHI, AICHI, 448-0029 (JP); FURUSE, Hideaki, KARIYA-SHI, AICHI, 448-0029 (JP); KOHARA, Kenji, TOKYO, 103-0022 (JP)
(74) Representative: Cabinet Beau de Loménie

(57) **Abstract**

A vehicle surrounding environment display device configured to generate a virtual space corresponding to a surrounding environment of a host vehicle on the basis of detection information from an external sensor of the host vehicle and display an image inside the virtual space viewed from a virtual viewpoint operated by a user of the host vehicle on a display, wherein a three-dimensional host vehicle icon corresponding to the host vehicle is disposed in the virtual space, and when the virtual viewpoint is located in an icon transformation region set above the rear or front of the host vehicle icon, the host vehicle icon is transformed so that a width of an upper surface of the host vehicle icon is narrower as compared to when the virtual viewpoint is not located in the icon transformation region.

## Description

### CROSS-REFERENCE TO RELATED APPLICATIONS

This application is based upon and claims the benefit of priority from Japanese Patent Application No. 2023-214570, filed on December 20, 2023, the entire contents of which is incorporated herein by reference and to which the person of the art can refer to when considering the present disclosure.

### TECHNICAL FIELD

The present disclosure relates to a vehicle surrounding environment display device and a method for controlling a vehicle surrounding environment display device.

### BACKGROUND

In the related art, Japanese Unexamined Patent Publication No. 2020-088697 is known as a technical document relating to a vehicle surrounding environment display device. This publication describes a surroundings monitoring device that generates a virtual space including a host vehicle icon and projects a surrounding environment of a vehicle as a three-dimensional image into the virtual space. With this device, a user can freely view the environment around the vehicle by manipulating a virtual viewpoint in the virtual space.

### SUMMARY

However, as in the above-described device in the related art, when the virtual space viewed from the virtual viewpoint is displayed on a display and the user is allowed to view it, it is difficult to understand a positional relationship between the vehicle and surrounding objects as compared to a real environment. For this reason, a technique of correcting a user's perception to inhibit a sense of incongruity in the user's perception of an surrounding environment of a host vehicle is desired.

One aspect of the present disclosure is a vehicle surrounding environment display device configured to generate a virtual space corresponding to a surrounding environment of a host vehicle on the basis of detection information from an external sensor of the host vehicle and display an image inside the virtual space viewed from a virtual viewpoint operated by a user of the host vehicle on a display. A three-dimensional host vehicle icon corresponding to the host vehicle is disposed in the virtual space, and when the virtual viewpoint is located in an icon transformation region set above either a rear or a front of the host vehicle icon, the vehicle surrounding environment display device transforms the host vehicle icon so that a width of an upper surface of the host vehicle icon is narrower as compared to when the virtual viewpoint is not located in the icon transformation region.

According to the vehicle surrounding environment display device according to one aspect of the present disclosure, when the virtual viewpoint is located in the icon transformation region, the host vehicle icon is transformed so that the width of the upper surface of the host vehicle icon is narrower as compared to when the virtual viewpoint is not located in the icon transformation region. Thus, it is possible to inhibit a sense of incongruity felt by the user in perceiving the surrounding environment of the host vehicle using the virtual space as compared to a real space.

In the vehicle surrounding environment display device according to one aspect of the present disclosure, when the virtual viewpoint is not located in the icon transformation region, the width of the upper surface of the host vehicle icon may narrow as a distance between the virtual viewpoint and the icon transformation region decreases, and the width of the upper surface of the host vehicle icon may be caused to come closer to a preset initial setting width as the distance between the virtual viewpoint and the icon transformation region increases.

Another aspect of the present disclosure is a vehicle surrounding environment display device configured to generate a virtual space corresponding to a surrounding environment of a host vehicle on the basis of detection information from an external sensor of the host vehicle and display an image of an inside of the virtual space viewed from a virtual viewpoint operated by a user of the host vehicle on a display. A three-dimensional host vehicle icon corresponding to the host vehicle is disposed in the virtual space, and when the virtual viewpoint is located in an icon transformation region set above either a rear or a front of the host vehicle icon, the vehicle surrounding environment display device transforms the host vehicle icon so that a height of the host vehicle icon is reduced as compared to when the virtual viewpoint is not located in the icon transformation region.

According to the vehicle surrounding environment display device according to another aspect of the present disclosure, when the virtual viewpoint is located in the icon transformation region, the host vehicle icon is transformed so that the height of the host vehicle icon is reduced as compared to when the virtual viewpoint is not located in the icon transformation region. Thus, it is possible to inhibit a sense of incongruity felt by the user in perceiving the surrounding environment of the host vehicle using the virtual space as compared to a real space.

In the vehicle surrounding environment display device according to another aspect of the present disclosure, when the virtual viewpoint is not located in the icon transformation region, the height of the host vehicle icon may be reduced as a distance between the virtual viewpoint and the icon transformation region decreases, and the height of the host vehicle icon may be caused to come closer to a preset initial setting height as the distance between the virtual viewpoint and the icon transformation region increases.

Yet another aspect of the present disclosure is a method for controlling a vehicle surrounding environment display device configured to generate a virtual space corresponding to a surrounding environment of a host vehicle on the basis of detection information from an external sensor of the host vehicle and display an image of an inside of the virtual space viewed from a virtual viewpoint operated by a user of the host vehicle on a display. In this controlling method, a three-dimensional host vehicle icon corresponding to the host vehicle is disposed in the virtual space, and when the virtual viewpoint is located in an icon transformation region set above either a rear or a front of the host vehicle icon, the host vehicle icon is transformed so that a width of an upper surface of the host vehicle icon is narrower as compared to when the virtual viewpoint is not located in the icon transformation region.

According to the method for controlling the vehicle surrounding environment display device according to yet another aspect of the present disclosure, when the virtual viewpoint is located in the icon transformation region, the host vehicle icon is transformed so that the width of the upper surface of the host vehicle icon is narrower as compared to when the virtual viewpoint is not located in the icon transformation region. Thus, it is possible to inhibit a sense of incongruity felt by the user in perceiving the surrounding environment of the host vehicle using the virtual space as compared to a real space.

Even yet another aspect of the present disclosure is a method for controlling a vehicle surrounding environment display device configured to generate a virtual space corresponding to a surrounding environment of a host vehicle on the basis of detection information from an external sensor of the host vehicle and display an image inside the virtual space viewed from a virtual viewpoint operated by a user of the host vehicle on a display. In this controlling method, a three-dimensional host vehicle icon corresponding to the host vehicle is disposed in the virtual space, and when the virtual viewpoint is located in an icon transformation region set above either a rear or a front of the host vehicle icon, the host vehicle icon is transformed so that a height of the host vehicle icon is reduced as compared to when the virtual viewpoint is not located in the icon transformation region.

According to the method for controlling the vehicle surrounding environment display device according to yet another aspect of the present disclosure, when the virtual viewpoint is located in the icon transformation region, the host vehicle icon is transformed so that the height of the host vehicle icon is reduced as compared to when the virtual viewpoint is not located in the icon transformation region, and thus it is possible to inhibit a sense of incongruity felt by the user in perceiving the surrounding environment of the host vehicle using the virtual space as compared to a real space.

According to each aspect of the present disclosure, it is possible to inhibit a sense of incongruity felt by the user in perceiving the surrounding environment of the host vehicle using the virtual space as compared to a real space.

### BRIEF DESCRIPTION OF THE DRAWINGS

Fig. 1 is a block diagram showing a vehicle surrounding environment display device according to one embodiment.
Fig. 2 is a diagram for illustrating a host vehicle icon and a virtual viewpoint.
Fig. 3A is a diagram showing an example of the host vehicle icon before transformation.
Fig. 3B is a diagram showing an example of the host vehicle icon after transformation.
Fig. 4A is a diagram for illustrating an example of a transformation state of the host vehicle icon when the virtual viewpoint is located in an icon transformation region.
Fig. 4B is a diagram for illustrating an example of the transformation state of the host vehicle icon when the virtual viewpoint leaves the icon transformation region and starts rotational movement to the right.
Fig. 4C is a diagram for illustrating an example of the transformation state of the host vehicle icon when the virtual viewpoint moves and rotates to the right.
Fig. 4D is a diagram for illustrating an example of the deformation state of the host vehicle icon when the virtual viewpoint rotates to the right side of the host vehicle icon.
Fig. 5A is a diagram showing an example of a transformation rate of the host vehicle icon corresponding to Fig. 4A.
Fig. 5B is a diagram showing an example of the transformation rate of the host vehicle icon corresponding to Fig. 4B.
Fig. 5C is a diagram showing an example of the transformation rate of the host vehicle icon corresponding to Fig. 4C.
Fig. 5D is a diagram showing an example of the transformation rate of the host vehicle icon corresponding to Fig. 4D.
Fig. 6A is a diagram showing a first modified example of the host vehicle icon transformation.
Fig. 6B is a diagram showing a second modified example of the host vehicle icon transformation.
Fig. 6C is a diagram showing a third modified example of the host vehicle icon transformation.
Fig. 6D is a diagram showing a fourth modified example of the host vehicle icon transformation.
Fig. 6E is a diagram showing a fifth modified example of the host vehicle icon transformation.
Fig. 6F is a diagram showing a sixth modified example of the host vehicle icon transformation.
Fig. 7 is a diagram illustrating an aspect of changing a height of the host vehicle icon.
Fig. 8 is a flowchart showing an example of a method for controlling the vehicle surrounding environment display device according to the present embodiment.

### DETAILED DESCRIPTION

An embodiment of the present disclosure will be described with reference to the drawings.

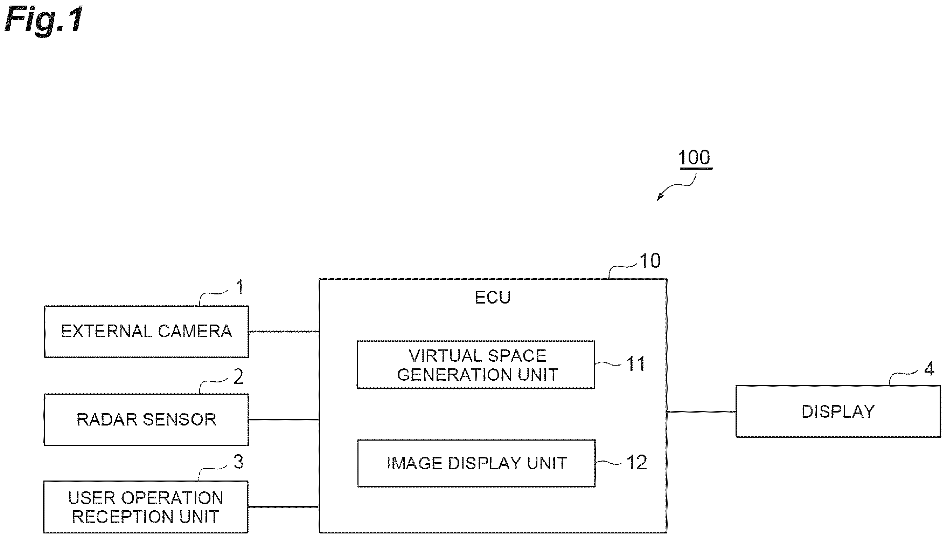

Fig. 1 is a block diagram showing a vehicle surrounding environment display device 100 according to one embodiment. The vehicle surrounding environment display device 100 shown in Fig. 1 is a device that is mounted on a vehicle (hereinafter referred to as a "host vehicle"), such as a passenger car or a freight car, for supporting a user's perception of a surrounding environment of the vehicle. The vehicle surrounding environment display device 100 generates a virtual space reflecting the surrounding environment of the host vehicle and displays an image of an inside of the virtual space viewed from a virtual viewpoint operated by the user on a display. The vehicle surrounding environment display device 100 displays the surrounding environment of the host vehicle on the display as a so-called 3D view.

The user may be a driver of the host vehicle, a passenger of the host vehicle, or an owner of the host vehicle. The user may be an operator who performs remote assistance for the host vehicle using a remote assistance system. In the remote assistance system, the operator can make decisions regarding the running of the host vehicle (determinations of whether to proceed, turn right or left, stop, and the like) or perform driving operations of the host vehicle through remote assistance equipment that is provided outside the vehicle and can communicate with the host vehicle. The host vehicle is not limited to a vehicle that can be remotely assisted by the remote assistance system. The host vehicle may be a vehicle that has an automatic driving function or may be a vehicle that does not have an automatic driving function.

### [Configuration of vehicle surrounding environment display device]

As shown in Fig. 1, the vehicle surrounding environment display device 100 includes an electronic control unit (ECU) 10 that generally manages the device. The ECU 10 is an electronic control unit that has a central processing unit (CPU) and a memory unit. The memory unit is configured of, for example, a read-only memory (ROM), a random access memory (RAM), or an electrically erasable programmable read-only memory (EEPROM). The ECU 10 implements various functions by, for example, executing a program stored in the memory unit with the CPU. The ECU 10 may be configured of a plurality of electronic units. The ECU 10 is connected to an external camera 1 (external sensor), a radar sensor 2 (external sensor), a user operation reception unit 3, and a display 4.

The external camera 1 is an imaging device that captures an external situation of the host vehicle. The external camera 1 is configured to include, for example, a front camera that captures images forward from the host vehicle, a back camera that captures images rearward from the host vehicle, and side cameras that capture images leftward and rightward from the host vehicle. The number of cameras of the external camera 1 is not particularly limited and may be one. The external camera 1 transmits captured image information to the ECU 10.

The radar sensor 2 is a detection device that detects an object around the host vehicle using radio waves (for example, millimeter waves) or light. The radar sensor 2 can be configured to include a millimeter wave radar or LIDAR (Light Detection and Ranging). The radar sensor 2 transmits object detection information relating to the detected object to the ECU 10. In addition, the radar sensor 2 and the external camera 1 constitute an external sensor for detecting the surrounding environment of the host vehicle. The object detection information of the radar sensor 2 or the captured image information of the external camera 1 corresponds to detection information of the external sensor.

The user operation reception unit 3 is a device that receives the user's operation of the virtual viewpoint. The user operation reception unit 3 can be, for example, an input unit of a human machine interface (HMI) provided in the host vehicle. The input unit includes, for example, a touch panel display, buttons, levers, switches, or the like. In addition, the user operation reception unit 3 may be capable of receiving operations by voice recognition or gestures.

For the user operation reception unit 3, a mobile terminal or a computer input device communicating with the host vehicle may be usable. Also, for the user operation reception unit 3, an operator terminal of the remote assistance system may be available.

The display 4 is, for example, a center display mounted on a dashboard of the host vehicle. The display 4 may be a display of a tablet computer that can be installed in the host vehicle, or a head up display (HUD). The display 4 is not limited to being mounted on the host vehicle. The display 4 may be a display for the operator of the remote assistance system provided in a facility away from the host vehicle. The display 4 may be a display of a mobile terminal carried by the user, or a display of the user's tablet computer or desktop computer.

Next, a functional configuration of the ECU 10 will be described. As shown in Fig. 1, the ECU 10 has a virtual space generation unit 11 and an image display unit 12. An aspect in which some of the functions of the ECU 10 described below may be executed in a manner by a server, a mobile terminal, or a computer capable of communicating with the host vehicle may be adopted. The server capable of communicating with the host vehicle may be, for example, a server of the remote assistance system. The computer may be, for example, a tablet computer or a desktop computer.

The virtual space generation unit 11 generates the virtual space corresponding to the surrounding environment of the host vehicle, for example, on the basis of the captured image information of the external camera 1. The surrounding environment of the host vehicle may include, for example, positions of white lines of a lane on which the host vehicle runs. The surrounding environment of the host vehicle may also include a situation (positions, traveling directions, or the like) of another vehicle, such as a preceding vehicle or an adjacent vehicle traveling parallel to the host vehicle.

The virtual space is generated, for example, as a 3D image obtained by combining a plurality of images. A method for combining the images is not particularly limited. The virtual space generation unit 11 generates the virtual space as a 3D image, for example, by projecting each image onto a global coordinate system that serves as a reference for the virtual space and associating overlapping pixels with each other.

The virtual space generation unit 11 disposes a host vehicle icon corresponding to the host vehicle in the virtual space. The host vehicle icon is placed as a three-dimensional icon in the shape of a car. The host vehicle icon can be formed by polygon, voxel, or other CG processing. The virtual space generation unit 11 may generate a host vehicle icon reflecting a state of the host vehicle. The virtual space generation unit 11 may reflect a lighting state of the host vehicle (lighting states of headlights, turn signals, brake lights, and the like) in the lighting state of the lighting devices of the host vehicle icon, or may reflect steering angles of tires of the host vehicle in the tires of the host vehicle icon. A shape and a size of the host vehicle icon are preset according to a vehicle model.

When another vehicle is perceived on the basis of the captured image information of the external camera 1, the virtual space generation unit 11 may dispose a three-dimensional other vehicle icon corresponding to the other vehicle in the virtual space. Similarly, the virtual space generation unit 11 may dispose a three-dimensional pedestrian icon in the virtual space. The virtual space generation unit 11 may perceive the other vehicle or the like on the basis of the object detection information from the radar sensor 2, instead of the captured image information of the external camera 1, and may perceive the other vehicle or the like using both the external camera 1 and the radar sensor 2.

Also, the virtual space generation unit 11 may perceive other vehicles and objects around the host vehicle using information about the surrounding environment perceived by the other vehicle through vehicle-to-vehicle communication. The virtual space generation unit 11 may acquire image information from cameras installed on roads and various types of traffic information by communicating with a traffic information management server managed by the government, for example, and perceive the other vehicle using these.

In addition, the virtual space generation unit 11 may predict a behavior of the other vehicle on the basis of the captured image information of the external camera 1 or the object detection information of the radar sensor 2, and may display the predicted results of the behavior of the other vehicle in association with another vehicle icon. The virtual space generation unit 11 may display, for example, a predicted route of the other vehicle using an arrow icon or the like, or may display a predicted stopping position of the other vehicle during deceleration using a block-shaped icon extending in a width direction of the lane. Similarly, the virtual space generation unit 11 may display predicted results of a behavior of the pedestrian in association with a pedestrian icon.

A method for generating the virtual space is not limited to the method for combining a plurality of images from the external camera 1. The virtual space generation unit 11 does not need to generate the virtual space as a 3D image as long as the user can perceive the surrounding environment of the host vehicle. Instead of the image, the virtual space generation unit 11 may generate a digital virtual space by disposing the host vehicle icon, the white lines, and the other vehicle icon so that a positional relationship of the white lines and the other vehicle relative to the host vehicle can be understood.

The image display unit 12 displays an image of the inside of the virtual space viewed from the virtual viewpoint operated by the user in the virtual space generated by the virtual space generation unit 11 on the display 4. The image display unit 12 moves a virtual viewpoint 50 in response to the user's operation input to the user operation reception unit 3.

The image display unit 12 corrects the user's perception of positions of the host vehicle icon M, the other vehicle icon, and the like by changing the shape of the host vehicle icon M in accordance with a position of the virtual viewpoint 50. Specifically, as an example, the image display unit 12 changes a width of an upper surface of the host vehicle icon M in accordance with the position of the virtual viewpoint 50.

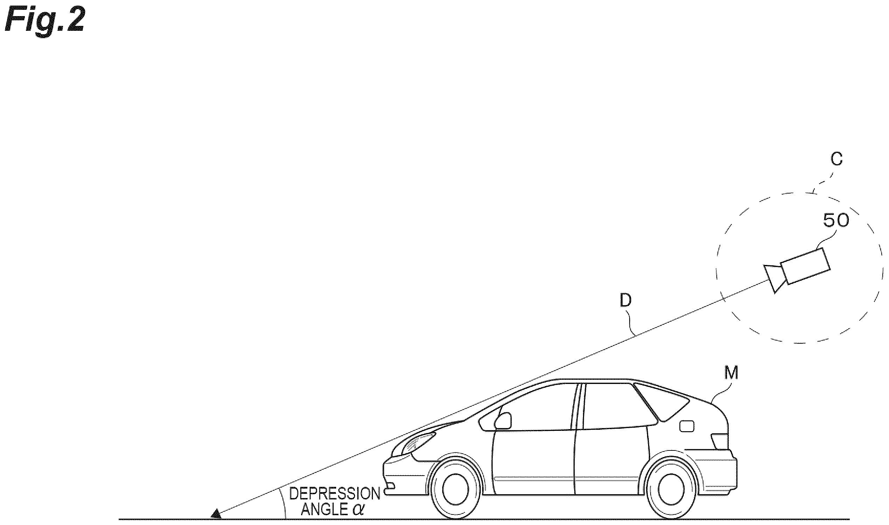

Fig. 2 is a diagram for illustrating the host vehicle icon and the virtual viewpoint. Fig. 2 shows the host vehicle icon M, the virtual viewpoint 50, and an icon transformation region C. A plane on which the host vehicle icon M is disposed corresponds to a horizontal plane of the global coordinate system. In Fig. 2, a line of sight D of the virtual viewpoint 50 and a depression angle α of the virtual viewpoint 50 are shown. In order to facilitate understanding, Fig. 2 illustrates the virtual viewpoint 50 as a camera icon. The depression angle α is an angle between the line of sight D and the plane on which the host vehicle icon M is disposed in a vertical plane or the horizontal plane of the global coordinate system. Also, the virtual viewpoint 50 does not necessarily have to be displayed as an icon in the virtual space.

The icon transformation region C is a region that is set in advance for use in transforming the host vehicle icon M. As shown in Fig. 2, the icon transformation region C is, for example, a spherical region set above a rear of the host vehicle icon M. The icon transformation region C may be a rectangular parallelepiped region, a cylindrical region, a triangular pyramid region, or a polygonal region. The icon transformation region C may be a region that expands from the host vehicle icon M diagonally upward and rearward from the host vehicle icon M in a sector-shaped cross-section. A shape of the icon transformation region C is not particularly limited.

The icon transformation region C may be set to include an initial position of the virtual viewpoint 50. The initial position of the virtual viewpoint is a position in the virtual space at which the virtual viewpoint 50 is located in advance when an image display function of the vehicle surrounding environment display device 100 is activated. The icon transformation region C may be a region configured of one coordinate point in the global coordinate system. The coordinate point may be the initial position of the virtual viewpoint 50.

A width of the icon transformation region C may be set not to exceed a width of the host vehicle icon M. When an overall width of the host vehicle icon M changes due to the transformation, the width of the icon transformation region C can be set not to exceed the width of the host vehicle icon M when it is at its narrowest.

The image display unit 12 recognizes position information of the virtual viewpoint 50 in the virtual space. When the virtual viewpoint 50 is located in the icon transformation region C, the image display unit 12 transforms the host vehicle icon M to narrow the width of the upper surface of the host vehicle icon M as compared to when the virtual viewpoint 50 is not located in the icon transformation region C. The image display unit 12 transforms the host vehicle icon M so that the way of appearance in which the upper surface of the vehicle is reflected larger by a perspective projection method can be corrected.

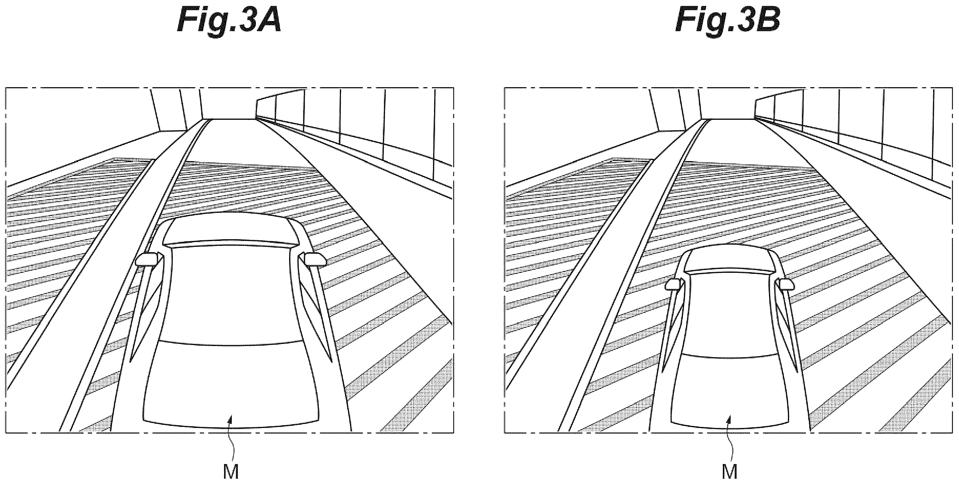

Fig. 3A is a diagram showing an example of the host vehicle icon M before transformation. Fig. 3B is a diagram showing an example of the host vehicle icon M after transformation. Fig. 3A shows the host vehicle icon M having a width (initial setting width) that is preset as an initial setting. Fig. 3B shows the host vehicle icon M having a width narrowed as compared to the initial setting width due to the virtual viewpoint 50 located in the icon transformation region C. In the host vehicle icon M, at least the width of the upper surface of the vehicle may be narrowed as a three-dimensional icon, and a width on a lower side of the vehicle may remain the initial setting width.

When the virtual viewpoint 50 is located in the icon transformation region C, the image display unit 12 corrects the user's perception by deforming so that the width of the host vehicle icon M narrows as shown in Fig. 3B. When the virtual viewpoint 50 is not located in the icon transformation region C, the image display unit 12 may display the host vehicle icon M to have an initial setting shape as shown in Fig. 3A.

Even when the virtual viewpoint 50 is not located in the icon transformation region C, the image display unit 12 may transform the host vehicle icon M in accordance with a change in positional relationship between the virtual viewpoint 50 and the icon transformation region C. That is, the image display unit 12 may adopt an aspect in which the host vehicle icon M is smoothly transformed in response to the user's operation of the virtual viewpoint 50.

Specifically, outside the icon transformation region C, the image display unit 12 may transform the host vehicle icon M so that the width of the upper surface returns to the initial setting width as a distance between the virtual viewpoint 50 and the icon transformation region C increases. The distance may be a straight-line distance in the global coordinate system, or may be counted as a distance along a rotation trajectory in the case of rotational movement. If a plurality of icon transformation regions C are present, a distance to the icon transformation region C closest to the virtual viewpoint 50 is used.

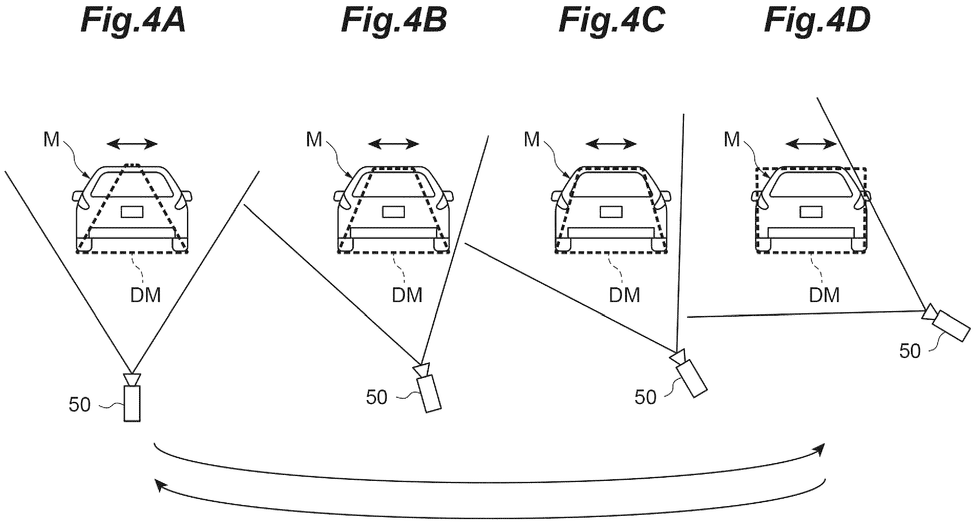

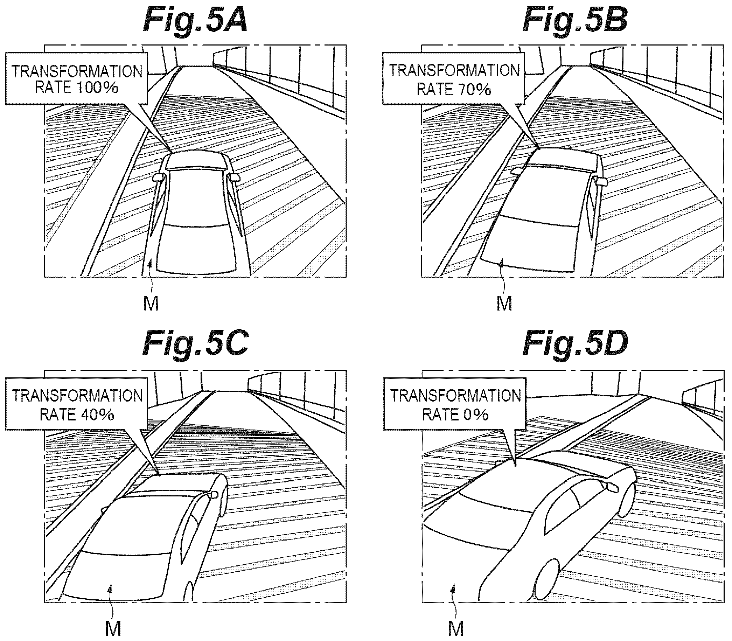

A change of the host vehicle icon M when the virtual viewpoint 50 is not located in the icon transformation region C will be described with reference to Figs. 4A to 4D and Figs. 5A to 5D. Fig. 4A is a diagram for illustrating an example of a transformation state of the host vehicle icon M when the virtual viewpoint 50 is located in the icon transformation region C. Fig. 4B is a diagram for illustrating an example of the transformation state of the host vehicle icon M when the virtual viewpoint 50 leaves the icon transformation region C and starts rotational movement to the right.

Subsequently, Fig. 4C is a diagram for illustrating an example of the transformation state of the host vehicle icon M when the virtual viewpoint 50 rotates and moves further to the right. Fig. 4D is a diagram for illustrating an example of the transformation state of the host vehicle icon M when the virtual viewpoint 50 rotates to a right side of the host vehicle icon M.

In Figs. 4A to 4D, in order to express the transformation state in an easy-to-understand manner, the host vehicle icon M is fixed to the initial setting width, and the transformation state when viewed from a back side of the host vehicle icon M is shown by a dashed line DM. The image display unit 12 transforms the host vehicle icon M so that a length of an upper side of the trapezoidal dashed line DM (the width of the upper surface of the host vehicle icon M) when viewed from a rear view increases from Fig. 4A toward Fig. 4D. In Figs. 4A to 4D, the host vehicle icon M is a trapezoidal three-dimensional icon when viewed from a rear view.

In addition, Fig. 5A is a diagram showing an example of a transformation rate of the host vehicle icon M corresponding to Fig. 4A. Fig. 5B is a diagram showing an example of the transformation rate of the host vehicle icon M corresponding to Fig. 4B. Fig. 5C is a diagram showing an example of the transformation rate (deformation rate) of the host vehicle icon M corresponding to Fig. 4C. Fig. 5D is a diagram showing an example of the transformation rate of the host vehicle icon M corresponding to Fig. 4D. Also, Fig. 5A to Fig. 5D are for reference only and do not reflect the exact transformation state of the host vehicle icon M.

As shown in Figs. 4A to 4D and Figs. 5A to 5D, the image display unit 12 transforms the host vehicle icon M so that the width of the upper surface of the host vehicle icon M returns to the initial setting width as the virtual viewpoint 50 rotates to the right and moves away from the icon transformation region C after the virtual viewpoint 50 rotates to the right and leaves the icon transformation region C. Specifically, the image display unit 12 can change the transformation state of the host vehicle icon M so that the transformation rate becomes 100% in Fig. 5A, the transformation rate becomes 70% in Fig. 5B, the transformation rate becomes 40% in Fig. 5C, and the transformation rate becomes 0% in Fig. 5D.

When the virtual viewpoint 50 is rotated to the left due to the user's operation to come closer to the icon transformation region C, the image display unit 12 transforms the host vehicle icon M so that the width of the upper surface of the host vehicle icon M gradually narrows in the order of Figs. 5D, 5C, 5B, and 5A. In this way, by smoothly transforming the host vehicle icon M in accordance with the positional relationship between the virtual viewpoint 50 and the icon transformation region C, it is possible to inhibit a sense of incongruity felt by the user with respect to the transformation of the host vehicle icon M.

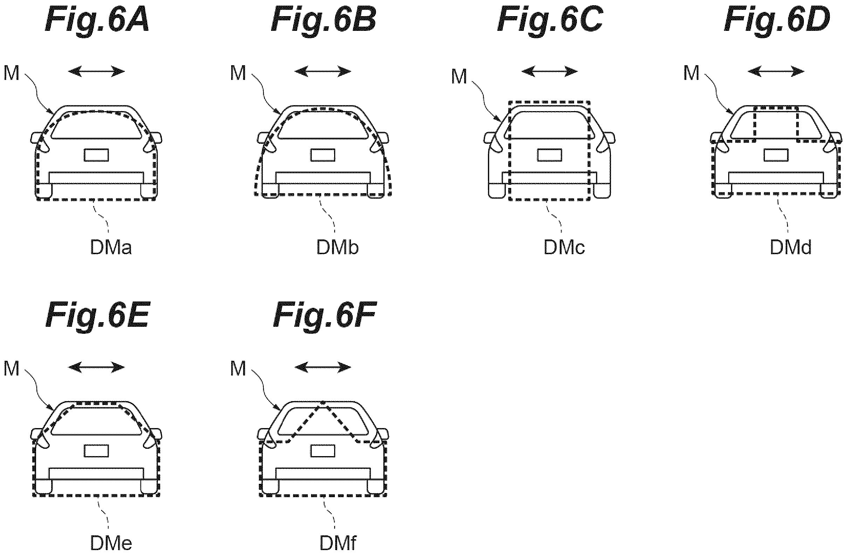

Transformation modes of the host vehicle icon M are not limited to the modes shown in Figs. 4A to 4D and Figs. 5A to 5D. Figs. 6A to 6F show various modified examples of the host vehicle icon transformation. Fig. 6A is a diagram showing a first modified example of the host vehicle icon transformation. A dashed line DMa shown in Fig. 6A has a shape formed by combining an upward arc on a box shape when viewed from a rear view of the host vehicle icon M. As the first modified example, the image display unit 12 can display the host vehicle icon M as a three-dimensional icon having the shape shown in Fig. 6A when viewed from a rear view.

Fig. 6B is a diagram showing a second modified example of the host vehicle icon transformation. A dashed line DMb shown in Fig. 6B has a shape obtained by cutting a vertically elongated ellipse in half along its minor axis. As the second modified example, the image display unit 12 may display the host vehicle icon M as a three-dimensional icon having the shape as shown in Fig. 6B when viewed from a rear view. In Fig. 6B, not only the width of the upper surface of the host vehicle icon M but also the overall width including its lower surface is changed. Fig. 6C is a diagram showing a third modified example of the host vehicle icon transformation. As the third modified example, the image display unit 12 may display the host vehicle icon M as a rectangular three-dimensional icon as shown by a dashed line DMc in Fig. 6C when viewed from a rear view. In Fig. 6C as well, the overall width including the lower surface of the host vehicle icon M is changed.

Fig. 6D is a diagram showing a fourth modified example of the host vehicle icon transformation. As the fourth modified example, the image display unit 12 may display the host vehicle icon M as a three-dimensional icon having a convex shape as shown by a dashed line DMd in Fig. 6D when viewed from a rear view. Fig. 6E is a diagram showing a fifth modified example of the host vehicle icon transformation. As the fifth modified example, the image display unit 12 may display the host vehicle icon M as a three-dimensional icon having a shape formed by combining a trapezoid on a box shape as shown by a dashed line DMe in Fig. 6E when viewed from a rear view. Fig. 6F is a diagram showing a sixth modified example of the host vehicle icon transformation. As the sixth modified example, the image display unit 12 may display the host vehicle icon M as a three-dimensional icon having a shape formed by combining a triangle on a box shape as shown by a dashed line DMf in Fig. 6F when viewed from a rear view. In Fig. 6F, for example, the width of the upper surface of the host vehicle icon M is changed by changing a width between left and right ends of the triangle while maintaining the triangle.

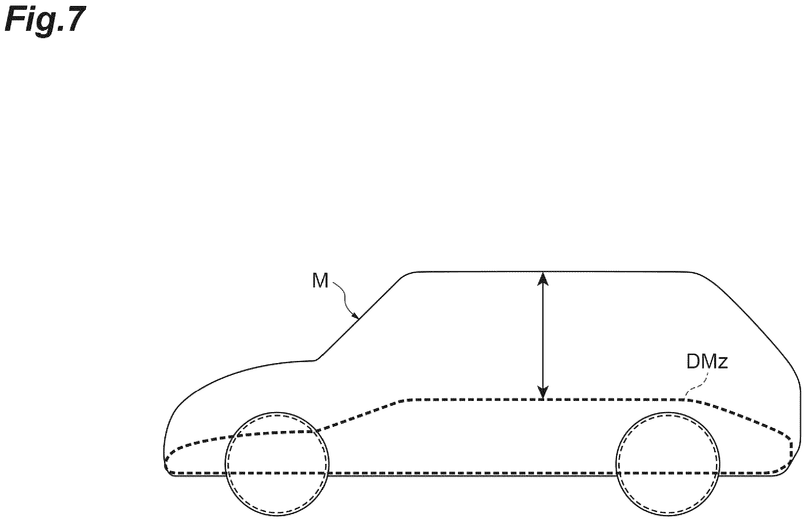

In addition, the image display unit 12 may change a height of the host vehicle icon M instead of changing the width of the upper surface of the host vehicle icon M. Fig. 7 is a diagram for illustrating an aspect in which the height of the host vehicle icon M is changed. As shown by a dashed line DMz in Fig. 7, the image display unit 12 may change the height of the host vehicle icon M, thereby performing correction so that the user does not have a sense of incongruity in perceiving the surrounding environment of the host vehicle using the virtual space.

For example, when the virtual viewpoint 50 is located in the icon transformation region C, the image display unit 12 performs transformation of the host vehicle icon M to reduce the height of the host vehicle icon M as compared to when the virtual viewpoint 50 is not located in the icon transformation region C. Also, an initial setting height is set for the host vehicle icon M. The initial setting height is a height that is set in advance as the initial setting of the host vehicle icon M.

Further, outside the icon transformation region C, the image display unit 12 may transform the host vehicle icon M so that the height returns to the initial setting height as the distance between the virtual viewpoint 50 and the icon transformation region C increases. Similarly to the change in the width of the upper surface of the host vehicle icon M, the image display unit 12 can smoothly change the height of the host vehicle icon M in accordance with a change in the position of the virtual viewpoint 50. Also, the image display unit 12 may adopt an aspect in which both the width of the upper surface of the host vehicle icon M and the height of the host vehicle icon M are changed.

### [Program]

The program causes the ECU 10 to function as the virtual space generation unit 11 and the image display unit 12 described above. The program is provided, for example, by a non-transitory recording medium such as a ROM or a semiconductor memory. Also, the program may be provided via communication such as a network.

### [Method for controlling vehicle surrounding environment display device]

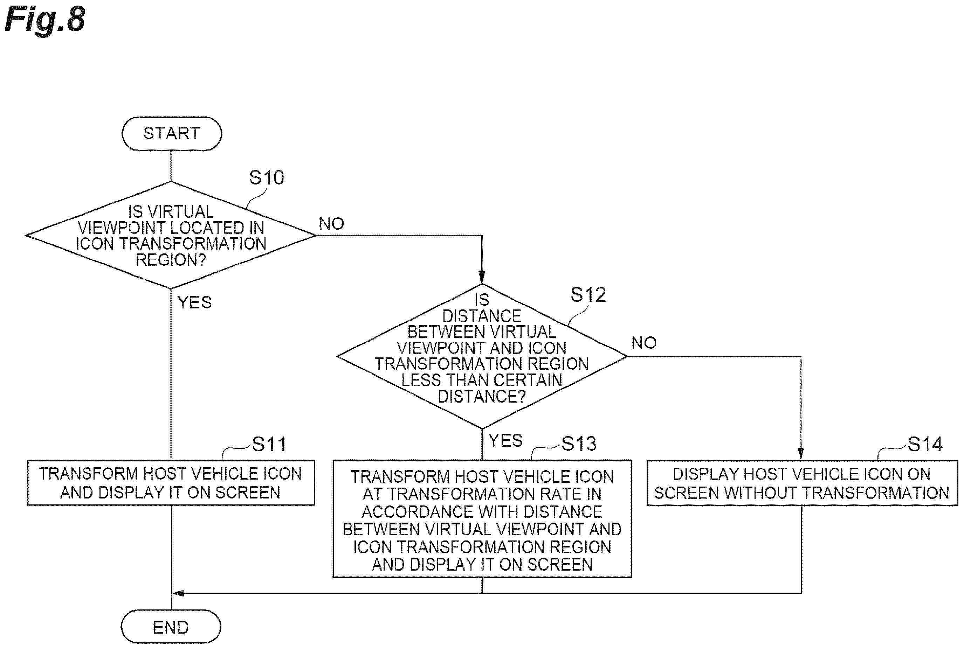

Next, a method for controlling the vehicle surrounding environment display device 100 according to the present embodiment will be described with reference to the drawings. Fig. 8 is a flowchart showing an example of the method for controlling the vehicle surrounding environment display device 100 according to the present embodiment.

As shown in Fig. 8, the ECU 10 of the vehicle surrounding environment display device 100 determines, in S10, whether or not the virtual viewpoint 50 is located in the icon transformation region C by the image display unit 12. If the ECU 10 determines that the virtual viewpoint 50 is located in the icon transformation region C (S10: YES), the process proceeds to S 11. If the ECU 10 does not determine that the virtual viewpoint 50 is located in the icon transformation region C (S10: NO), the process proceeds to S12.

In S11, the ECU 10 causes the image display unit 12 to transform the host vehicle icon M and display it on a screen. The ECU 10 applies the transformation to narrow the width of the upper surface of the host vehicle icon M with a transformation rate of 100%, for example, and then displays it on the display 4. Then, the current process ends.

In S12, the ECU 10 causes the image display unit 12 to determine whether or not the distance between the virtual viewpoint 50 and the icon transformation region C is less than a certain distance. If the ECU 10 determines that the distance between the virtual viewpoint 50 and the icon transformation region C is less than the certain distance (S12: YES), the process proceeds to S13. If the ECU 10 does not determine that the distance between the virtual viewpoint 50 and the icon transformation region C is less than the certain distance (S12: NO), the process proceeds to S14.

In S13, the ECU 10 causes the image display unit 12 to transform the host vehicle icon M at a transformation rate in accordance with the distance between the virtual viewpoint 50 and the icon transformation region C and displays it on the screen. The ECU 10 displays the image so that the host vehicle icon M is transformed smoothly and with a little sense of incongruity when the user changes the position of the virtual viewpoint 50. Then, the current process ends.

In S14, the ECU 10 causes the image display unit 12 to display the host vehicle icon M without transforming it. The host vehicle icon M is displayed, for example, in the initial setting shape. Then, the current process ends.

According to the vehicle surrounding environment display device 100 and the controlling method thereof according to the present embodiment described above, when the virtual viewpoint 50 is located in the icon transformation region C, the host vehicle icon M is transformed so that the width of the upper surface of the host vehicle icon M is narrower as compared to when the virtual viewpoint 50 is not located in the icon transformation region C, and thus it is possible to inhibit a sense of incongruity felt by the user in perceiving the surrounding environment of the host vehicle using the virtual space as compared to a real space. In addition, the same effect can be obtained also in the case of changing the height of the host vehicle icon M instead of the width of the upper surface of the host vehicle icon M.

Further, the vehicle surrounding environment display device 100 can smoothly transform the host vehicle icon M in accordance with the distance between the virtual viewpoint 50 and the icon transformation region C, thereby inhibiting a sense of incongruity felt by the user with respect to the transformation of the host vehicle icon M.

Although the embodiment of the present disclosure has been described above, the present disclosure is not limited to the above-described embodiment. Starting from the above-described embodiment, the present disclosure can be implemented in various forms with various modifications and improvements added thereto on the basis of the knowledge of those skilled in the art.

The vehicle surrounding environment display device 100 may set the icon transformation region C above a front of the host vehicle icon M. The vehicle surrounding environment display device 100 may set the icon transformation region C above both a front and a rear of the host vehicle icon M.

The vehicle surrounding environment display device 100 does not necessarily have to smoothly transform the host vehicle icon M in accordance with a change in the position of the virtual viewpoint 50. The vehicle surrounding environment display device 100 may adopt an aspect in which the shape of the host vehicle icon M is transformed at least when the virtual viewpoint 50 is located in the icon transformation region C and when the virtual viewpoint 50 is not located in the icon transformation region C.

## Claims

1. A vehicle surrounding environment display device (100) configured to generate a virtual space corresponding to a surrounding environment of a host vehicle on the basis of detection information from an external sensor (1, 2) of the host vehicle and display an image inside the virtual space viewed from a virtual viewpoint (50) operated by a user of the host vehicle on a display (4),
wherein a three-dimensional host vehicle icon (M) corresponding to the host vehicle is disposed in the virtual space, and
when the virtual viewpoint (50) is located in an icon transformation region (C) set above the rear or front of the host vehicle icon (M), the host vehicle icon (M) is transformed so that a width of an upper surface of the host vehicle icon (M) is narrower as compared to when the virtual viewpoint (50) is not located in the icon transformation region (C).

2. The vehicle surrounding environment display device (100) according to claim 1, wherein when the virtual viewpoint (50) is not located in the icon transformation region (C), the width of the upper surface of the host vehicle icon (M) narrows as a distance between the virtual viewpoint (50) and the icon transformation region (C) decreases, and the width of the upper surface of the host vehicle icon (M) is caused to come closer to a preset initial setting width as the distance between the virtual viewpoint (50) and the icon transformation region (C) increases.

3. A vehicle surrounding environment display device (100) configured to generate a virtual space corresponding to a surrounding environment of a host vehicle on the basis of detection information from an external sensor (1, 2) of the host vehicle and display an image inside the virtual space viewed from a virtual viewpoint (50) operated by a user of the host vehicle on a display (4),
wherein a three-dimensional host vehicle icon (M) corresponding to the host vehicle is disposed in the virtual space, and
when the virtual viewpoint (50) is located in an icon transformation region (C) set above the rear or front of the host vehicle icon (M), the host vehicle icon (M) is transformed so that a height of the host vehicle icon (M) is reduced as compared to when the virtual viewpoint (50) is not located in the icon transformation region (C).

4. The vehicle surrounding environment display device (100) according to claim 3, wherein when the virtual viewpoint (50) is not located in the icon transformation region (C), the height of the host vehicle icon (M) is reduced as a distance between the virtual viewpoint (50) and the icon transformation region (C) decreases, and the height of the host vehicle icon (M) is caused to come closer to a preset initial setting height as the distance between the virtual viewpoint (50) and the icon transformation region (C) increases.

5. A method for controlling a vehicle surrounding environment display device (100) configured to generate a virtual space corresponding to a surrounding environment of a host vehicle on the basis of detection information from an external sensor (1, 2) of the host vehicle and display an image inside the virtual space viewed from a virtual viewpoint (50) operated by a user of the host vehicle on a display (4),
wherein a three-dimensional host vehicle icon (M) corresponding to the host vehicle is disposed in the virtual space, and
when the virtual viewpoint (50) is located in an icon transformation region (C) set above the rear or front of the host vehicle icon (M), the host vehicle icon (M) is transformed so that a width of an upper surface of the host vehicle icon (M) is narrower as compared to when the virtual viewpoint (50) is not located in the icon transformation region (C).

6. A method for controlling a vehicle surrounding environment display device (100) configured to generate a virtual space corresponding to a surrounding environment of a host vehicle on the basis of detection information from an external sensor (1, 2) of the host vehicle and display an image inside the virtual space viewed from a virtual viewpoint (50) operated by a user of the host vehicle on a display,
wherein a three-dimensional host vehicle icon (M) corresponding to the host vehicle is disposed in the virtual space, and
when the virtual viewpoint (50) is located in an icon transformation region (C) set above either a rear or a front of the host vehicle icon (M), the host vehicle icon (M) is transformed so that a height of the host vehicle icon (M) is reduced as compared to when the virtual viewpoint (50) is not located in the icon transformation region (C).
